# EUROPEAN PATENT APPLICATION

(11) **EP 4 567 959 A1**
(43) Date of publication of application: **11.06.2025**
(21) Application number: 24845857.2
(22) Date of filing: 05.07.2024
(51) Int. Cl.: H01M 10/42, H01M 4/13, H01M 4/62, H01M 10/052, H01M 4/02

(54) **POSITIVE ELECTRODE FOR ALL-SOLID-STATE BATTERY, AND ALL-SOLID-STATE BATTERY COMPRISING SAME**

(30) Priority: 21.07.2023 KR 20230094993
(71) Applicant: LG Energy Solution, Ltd., Seoul 07335 (KR)
(72) Inventor: LEE, Choonghyeon, Daejeon 34122 (KR); KIM, Taegon, Daejeon 34122 (KR); KIM, Myeongsoo, Daejeon 34122 (KR); KWON, Hyejin, Daejeon 34122 (KR); SONG, Min Sang, Daejeon 34122 (KR)
(74) Representative: Goddar, Heinz J.
(86) International application number: PCT/KR2024/009560
(87) International publication number: WO 2025/023553

(57) **Abstract**

One aspect of the present disclosure relates to a positive electrode for all-solid-state battery and an all-solid-state battery comprising same. More specifically, the positive electrode active material layer of the present disclosure comprises a positive electrode active material, a sulfide-based solid electrolyte, a conductive material, and a porous carbon additive, wherein the particle diameter of the porous carbon additive is between the particle diameter of the positive electrode active material and the particle diameter of the sulfide-based solid electrolyte, thereby increasing the contact interface between the positive electrode active material and the sulfide-based solid electrolyte while decreasing the porosity of the positive electrode as a whole, so that the conductivity of the positive electrode is maintained and the effect of increasing the energy density of the cell without a decrease in cell performance is achieved.

## Description

### [Technical Field]

This application claims the benefit of priority to Korean Patent Application No. 10-2023-0094993, filed July 21, 2023.

One aspect of the present disclosure relates to a positive electrode for an all-solid-state battery and an all-solid-state battery comprising the same.

### [Related Art]

A variety of batteries are being researched to overcome the limitations of current lithium secondary batteries in terms of capacity, safety, output, enlargement, and microminiaturization.

Representative examples include metal-air batteries, which have a very high theoretical capacity compared to lithium secondary batteries; all-solid-state batteries, which have no risk of explosion and are safe; supercapacitors in terms of output; NaS batteries or redox flow batteries (RFB) for large-scale applications; and thin film batteries for microminiaturization. Continuous research is being conducted in academia and industry on these technologies.

An all-solid-state battery is a battery in which the liquid electrolyte used in a conventional lithium secondary battery is replaced with a solid electrolyte, and since no flammable solvent is used in the battery, there is no possibility of ignition or explosion due to the decomposition reaction of the conventional electrolyte, which greatly improves safety. In addition, among all-solid-state batteries, technology development is continuing for sulfide-based all-solid-state batteries, which have a high ionic conductivity of solid electrolyte and can realize a high energy density of at least 900 Wh/L in theory. A sulfide-based all-solid-state battery refers to an all-solid-state battery containing a sulfide-based solid electrolyte.

In an all-solid-state battery system, lithium ions are not conducted by the liquid electrolyte contained in a conventional lithium-ion battery (LIB). Therefore, when manufacturing a positive electrode for sulfide-based all-solid-state batteries, it is necessary to increase the contact interface between the positive electrode active material and the sulfide-based solid electrolyte particles by adding small-diameter sulfide-based solid electrolyte particles inside the positive electrode to increase the conductivity of lithium ions. In addition, to improve energy density, the physical contact between the positive electrode active material, sulfide-based solid electrolyte particles, and other cell elements in the positive electrode must be enhanced, and the porosity of the positive electrode must be reduced after rolling, which must be maintained during charge and discharge.

Therefore, there is a continuous need to develop technologies that can further reduce the porosity at the positive electrode of sulfide-based all-solid-state batteries to improve the performance of all-solid-state batteries.

### [Prior Art Reference]

### [Patent Reference]

(Patent Reference 1)
Korean Laid-Open Patent Publication No. 2016-0118597

### [Detailed Description of the Invention]

### [Technical Problem]

The inventors of the present disclosure have conducted a multifaceted study to solve the above problem, and have discovered that, in manufacturing a positive electrode active material layer of a positive electrode for an all-solid-state battery, wherein a positive electrode active material, a sulfide-based solid electrolyte, a conductive material, and a porous carbon additive are used, while using the porous carbon additive having a particle diameter between the particle diameter of the positive electrode active material and the particle diameter of the sulfide-based solid electrolyte to fill the voids between the particles of the positive electrode active material and the sulfide-based solid electrolyte, if the specific surface area of the porous carbon additive is limited below a certain level, the porosity of the positive electrode active material layer is reduced and the energy density of the all-solid-state battery is improved.

Accordingly, it is an object of the present disclosure to provide a positive electrode for an all-solid-state battery with reduced porosity.

Another object of the present disclosure is to provide an all-solid-state battery comprising the positive electrode for an all-solid-state battery with reduced porosity.

### [Technical Solution]

To accomplish the above objectives, the present disclosure provides a positive electrode for an all-solid-state battery comprising a positive electrode active material, a sulfide-based solid electrolyte, a conductive material, and a porous carbon additive,
wherein the particle diameter of the porous carbon additive is between the particle diameter of the positive electrode active material and the particle diameter of the sulfide-based solid electrolyte,
wherein the porous carbon additive is a low specific surface area porous carbon additive having a BET specific surface area of 100 m²/g or less.

The present disclosure also provides a positive electrode for an all-solid-state battery, wherein the BET specific surface area of the porous carbon additive is 70 m²/g or less.

The present disclosure also provides a positive electrode for an all-solid-state battery, wherein the porous carbon additive has a particle diameter (D50) of 1.0 µm to 4.0 µm.

The present disclosure also provides a positive electrode for an all-solid-state battery, wherein the porous carbon additive has a bulk density of 0.18 g/cc or more.

The present disclosure also provides a positive electrode for an all-solid-state battery, wherein the porous carbon additive has a powder resistivity of 0.05 ohm.cm or less.

The present disclosure also provides a positive electrode for an all-solid-state battery, wherein the particle diameter (D50) of the positive electrode active material is 3.0 µm to 8.0 µm.

The present disclosure also provides a positive electrode for an all-solid-state battery, wherein the particle diameter (D50) of the sulfide-based solid electrolyte is 0.1 µm to 1.5 µm.

The present disclosure also provides a positive electrode for an all-solid-state battery, wherein the positive electrode is in the form of a pellet comprising a positive electrode active material, a sulfide-based solid electrolyte, a conductive material, and a porous carbon additive.

The present disclosure further provides a positive electrode for an all-solid-state battery, wherein the positive electrode comprises: a positive electrode current collector; and a positive electrode active material layer formed on one side of the positive electrode current collector, wherein the positive electrode active material layer comprises a positive electrode active material, a sulfide-based solid electrolyte, a conductive material, a binder, and a porous carbon additive.

The present disclosure further provides a positive electrode for an all-solid-state battery, wherein the binder comprises one or more selected from the group consisting of polytetrafluoroethylene (PTFE), polyethylene, polypropylene, ethylene/propylene copolymer, polybutadiene, polyethylene oxide, chlorosulfonated polyethylene, polyvinylpyrrolidone, polyvinylpyridine, polyvinyl alcohol, polyvinyl acetate, polypichlorohydrin, polyphosphazene, polyacrylonitrile, polystyrene, latex, acrylic resin, phenolic resin, epoxy resin, carboxymethylcellulose, hydroxypropyl cellulose, cellulose acetate, cellulose acetate butyrate, cellulose acetate propionate, cyanoethylcellulose, cyanoethyl sucrose, polyester, polyamide, polyether, polyimide, polycarboxylate, polycarboxylic acid, polyacrylic acid, polyacrylate, lithium polyacrylate, polymethacrylic acid, polymethacrylate, polyacrylamide, polyurethane, polyvinylidene fluoride, and poly(vinylidene fluoride)-hexafluoropropene.

The present disclosure also provides a positive electrode for an all-solid-state battery, wherein the conductive material is at least one type of linear conductive material selected from the group consisting of carbon nanotube (CNT) and carbon nanofiber (CNF).

The present disclosure also provides a positive electrode for an all-solid-state battery, wherein the porous carbon additive is one or more selected from the group consisting of soft carbon and hard carbon.

The present disclosure also provides a positive electrode for an all-solid-state battery, wherein the porous carbon additive is one or more selected from the group consisting of activated carbon and carbon black.

The present disclosure also provides a positive electrode for an all-solid-state battery, wherein the porosity of the positive electrode is 5 vol% to 19 vol%.

The present disclosure also provides a positive electrode for an all-solid-state battery, wherein the positive electrode active material is comprised in an amount of 55 to 90% by weight based on the total weight of the positive electrode, wherein the sulfide-based solid electrolyte is comprised in an amount of 10 to 50% by weight based on the total weight of the positive electrode, wherein the conductive material is comprised in an amount of 0.05 to 10% by weight based on the total weight of the positive electrode, wherein the porous carbon additive is comprised in an amount of 0.1 to 3% by weight based on the total weight of the positive electrode.

The present disclosure also provides an all-solid-state battery comprising the positive electrode, a negative electrode, and a solid electrolyte film interposed therebetween.

### [Advantageous Effects]

According to the positive electrode for an all-solid-state battery of the present disclosure, the porous carbon additive can improve the energy density of the all-solid-state battery by filling the voids between the particles of the positive electrode active material and the sulfide-based solid electrolyte, thereby reducing the porosity of the positive electrode. Furthermore, by using a linear conductive material as a conductive material for a positive electrode of an all-solid-state battery, the conductivity of the positive electrode is maintained, and thus, the effect of improving the energy density without reducing the performance of an all-solid-state battery can be achieved.

### [Brief Description of Drawing]

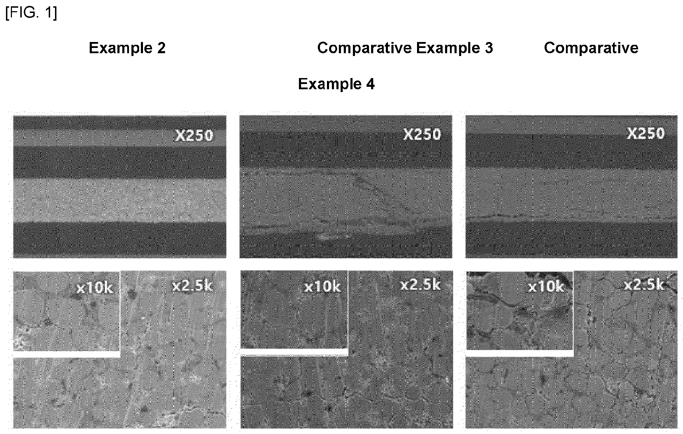

FIG. 1 is a scanning electron micrograph of the side of the positive electrode of a mixture prepared in Example 2, Comparative Example 3, and Comparative Example 4.

### [Best Mode]

Hereinafter, the present disclosure will be described in more detail to provide a better understanding.

The terms and words used in this specification and claims are not to be construed in their ordinary or dictionary sense, but rather in a sense and concept consistent with the technical idea of the present disclosure, based on the principle that the inventor may define the concept of a term as he/her sees fit to best describe his/her invention.

In this specification, to classify positive electrodes manufactured with and without a binder in the positive electrode active material layer, "composite positive electrode" may be referred to without a binder and "positive electrode" may be referred to with a binder.

### Positive Electrode for All-solid-state Battery

The present disclosure relates to a positive electrode for an all-solid-state battery.

The positive electrode for an all-solid-state battery according to the present disclosure comprises a positive electrode active material, a sulfide-based solid electrolyte, a conductive material, and a porous carbon additive.

In one example of the present disclosure, the positive electrode may be in the form of a pellet. The pelletized positive electrode may be used in a current collector free form, or the pellets may be placed on top of a current collector to form a positive electrode. The pellets may be formed by pressing a composite powder comprising a positive electrode active material, a sulfide-based solid electrolyte, a conductive material, and a porous carbon additive. The pellets may comprise no binder, thereby excluding any resistance that may be caused by the binder.

In another example of the present disclosure, the positive electrode may comprise a positive electrode current collector and a positive electrode active material layer formed on one side of the positive electrode current collector. The positive electrode active material layer may include the positive electrode active material, a sulfide-based solid electrolyte, a conductive material, a binder, and a porous carbon additive.

The particle diameter of the porous carbon additive is between the particle diameter of the positive electrode active material and the particle diameter of the sulfide-based solid electrolyte, and the porous carbon additive may have a BET specific surface area of 100 m²/g or less. The conductive material may be a linear conductive material, taking into account the specific surface area. As used herein, a positive electrode that does not include a binder may correspond to a composite positive electrode.

In a positive electrode for an all-solid-state battery according to the present disclosure, voids are formed due to a difference in the particle diameter between particles of the positive electrode active material and particles of a sulfide-based solid electrolyte, and the voids are filled with the porous carbon additive, so that the porosity of the positive electrode is reduced and the energy density can be improved. Since the particle diameter (D50) of the porous carbon additive is larger than the particle diameter (D50) of the sulfide-based solid electrolyte and smaller than the particle diameter (D50) of the positive electrode active material, the voids may be filled with the porous carbon additive.

In one example of the present disclosure, the porous carbon additive may have a BET specific surface area of 100 m²/g or less. Specifically, the specific surface area of the porous carbon additive may have a BET specific surface area of 100 m²/g or less, 90 m²/g or less, 80 m²/g or less, 70 m²/g or less, 60 m²/g or less, 50 m²/g or less, 40 m²/g or less, or 30 m²/g or less. If the BET specific surface area is greater than 100 m²/g, the contact interface between the high specific surface area porous carbon additive and the sulfide-based all-solid-state electrolyte for a positive electrode may be increased, which may increase the electrolyte degradation reaction and decrease the ionic conductivity of the positive electrode itself. Further, the lower limit of the BET specific surface area is not particularly limited, but may be 5 m²/g or more.

The porous carbon additive has a low specific surface area as defined above and may be referred to as macroporous carbon.

Further, the porous carbon additive may have a particle diameter (D50) of 1.0 µm to 4.0 µm. Specifically, the particle diameter (D50) of the porous carbon additive may be 1.0 µm or more, 1.5 µm or more, or 2.0 µm or more, and may be 3.0 µm or less, 3.5 µm or less, or 4.0 µm or less. If the particle diameter (D50) of the porous carbon additive is less than 1.0 µm, the particles are too small to fill the voids formed by the difference in particle diameter between the particles of the positive electrode active material and the sulfide-based solid electrolyte, and the porous carbon additive may be adsorbed only on the surface of the positive electrode active material, and if it is greater than 4.0 µm, it is difficult to fill the voids formed by the difference in particle diameter between the particles of the positive electrode active material and the sulfide-based solid electrolyte, and the effect of reducing the porosity of the positive electrode may be insignificant.

The particle diameter (D50) can be measured by introducing the porous carbon additive into a particle size analyzer (Mastersizer 3000, Malvern).

Further, the porous carbon additive may have a bulk density of 0.18 g/cc or greater.

Specifically, the bulk density may be greater than or equal to 0.18 g/cc, greater than or equal to 0.19 g/cc, or greater than or equal to 0.20 g/cc. If the bulk density is less than 0.18 g/cc, the porous carbon additive itself may have a lower density, thereby reducing the overall density of the positive electrode. The upper limit of the bulk density is not particularly limited, but may be 0.5 g/cc or less.

The bulk density may be measured using a density meter conforming to ASTM D 1895.

The powder resistivity of the porous carbon additive may be 0.05 ohm.cm or less.

Specifically, the powder resistivity may be 0.05 ohm/cm or less, 0.04 ohm/cm or less, or 0.03 ohm/cm or less. If the powder resistivity is greater than 0.05 ohm/cm, the resistance of the positive electrode as a whole may increase when the porous carbon additive in the positive electrode contains more than a certain fraction. The lower limit of the powder resistivity is not particularly limited, but may be greater than or equal to 0.005 ohm/cm. If the powder resistivity becomes excessively small, electron transfer with the sulfide-based all-solid-state electrolyte in contact with the porous carbon additive may be active, causing the sulfide-based all-solid-state electrolyte to exhibit a decomposition reaction.

The powder resistance may be measured using a powder resistivity meter (HPRM-FA2, Hantech). The lower punch is mounted on the body part of the powder resistivity meter mold, and then a sample for measuring a conductive material whose weight is known is weighed, and the upper punch is mounted and placed in the powder resistivity meter. The powder resistivity meter is then operated to pressurize from 0 to 2000 kgf in 400 kgf increments, and the final powder resistivity at 2000 kgf (196 MPa) can be observed.

In addition, the porous carbon additive may include one or more selected from the group consisting of soft carbon and hard carbon, but is not limited thereto as long as it is a carbon material in the particulate form. For example, the porous carbon additive may be one or more selected from the group consisting of activated carbon and carbon black.

Further, the porous carbon additive may be included in an amount of 0.1 to 3% by weight based on the total weight of the positive electrode active material layer. Specifically, the content of the porous carbon additive may be 0.1% by weight, 0.2% by weight or more, 0.3% by weight or more, 0.4% by weight or more, or 0.5% by weight or more, 1.2% by weight or less, 1.5% by weight or less, 2.0% by weight or less, 2.5% by weight or less, or 3.0% by weight or less. If the content of the porous carbon additive is less than 0.1% by weight, the energy density improvement due to the porosity reduced by the use of the porous carbon additive may be insignificant, and if the content is greater than 3% by weight, the mass transfer resistance may be larger.

In one example of the present disclosure, the particle diameter (D50) of the positive electrode active material may be 3.0 µm to 8.0 µm.

Specifically, the particle diameter (D50) of the positive electrode active material may be 3.0 µm or more, 3.5 µm or more, or 4.0 µm or more, and may be 6.0 µm or less, 6.5 µm or less, 7.0 µm or less, 7.5 µm or less, or 8.0 µm or less. If the particle diameter (D50) of the positive electrode active material is less than 3.0 µm, even if the positive electrode active material and the all-solid-state electrolyte are dispersed in the same weight ratio, the dispersibility may be reduced due to the small particle diameter of the positive electrode active material, and if it is greater than 7.0 µm, voids may be formed in the positive electrode active material layer that are too large, and the performance of an all-solid-state battery may be reduced.

The particle diameter (D50) can be measured by introducing the positive electrode active material into a particle size analyzer (Mastersizer 3000, Malvern).

Furthermore, the positive electrode active material may be any material capable of reversibly adsorbing and releasing lithium ions, without being particularly limited thereto, for example, a layered compound such as lithium cobalt oxide (LiCoO₂), lithium nickel oxide (LiNiO₂), Li[NiₓCo_{y}Mn_{z}Mᵥ]O₂ (wherein M is any one or two or more elements selected from the group consisting of Al, Ga and In; and 0.3≤x<1.0, 0≤y, z≤0.5, 0≤v≤0.1, and x+y+z+v=1), Li(LiₐM_{b-a-b'}M'_{b'})O_{2-c}A_{c} (wherein 0≤a≤0.2, 0.6≤b≤1, 0≤b'≤0.2, and 0≤c≤0.2; M comprises one or more selected from the group consisting of Mn, Ni, Co, Fe, Cr, V, Cu, Zn, and Ti; M' comprises one or more selected from the group consisting of Al, Mg and B; and A comprises one or more selected from the group consisting of P, F, S and N), or a compound substituted with one or more transition metals; a lithium manganese compound such as Li_{1+y}Mn_{2-y}O₄ (wherein y is 0 to 0.33), LiMnO₃, LiMn₂O₃, or LiMnO₂; a lithium copper oxide (Li₂CuO₂); a vanadium oxide, such as LiV₃O₈, LiFe₃O₄, V₂O₅, or Cu₂V₂O₇; a Ni site-type lithium nickel oxide represented by formula LiNi_{1-y}MyO₂ (wherein M is Co, Mn, Al, Cu, Fe, Mg, B or Ga, and y is 0.01 to 0.3); a lithium manganese complex oxide represented by formula LiMn_{2-y}M_{y}O₂ (where M is Co, Ni, Fe, Cr, Zn, or Ta, and y is 0.01 to 0.1) or Li₂Mn₃MO₈ (wherein M is Fe, Co, Ni, Cu, or Zn); LiMn₂O₄ wherein a portion of the Li in the formula is substituted with an alkaline earth metal ion; a disulfide compound; Fe₂(MoO₄)₃; and the like, but is not limited thereto.

Further, the positive electrode active material may be included in an amount of 55 to 90% by weight based on the total weight of the positive electrode active material layer. Specifically, the content of the positive electrode active material may be 55% by weight, 60% by weight or more, or 65% by weight or more, 83% by weight or less, 85% by weight or less, or 90% by weight or less. If the content of the positive electrode active material is less than 55% by weight, the battery performance may be reduced, and if the content is greater than 90% by weight, the mass transfer resistance may be increased.

In one example of the present disclosure, the particle diameter (D50) of the sulfide-based solid electrolyte may be 0.1 µm to 1.5 µm.

Specifically, the particle diameter (D50) of the sulfide-based solid electrolyte may be 0.1 µm or more, 0.3 µm or more, or 0.5 µm or more, and may be 0.9 µm or less, 1.0 µm or less, 1.2 µm or less, or 1.5 µm or less. If the particle diameter (D50) of the sulfide-based solid electrolyte is less than 0.1 µm, the ultra-fine all-solid-state electrolyte may not be sufficiently dispersed in the positive electrode layer and may agglomerate, and if it is greater than 1.5 µm, the dispersion may be somewhat easier, but the contact surface with the positive electrode active material particles may be reduced and the positive electrode porosity may increase.

Further, the sulfide-based solid electrolyte may comprise one or more selected from the group consisting of LiPSX (wherein X is Cl, Br, or I), LiGePS, and LiPS. However, the sulfide-based solid electrolyte is not limited to these, and a wide range of sulfide-based solid electrolytes conventionally used in the art may be used.

Further, the sulfide-based solid electrolyte may be included in an amount of 10 to 50% by weight based on the total weight of the positive electrode active material layer. Specifically, the content of the sulfide-based solid electrolyte may be 10% by weight or more, 20% by weight or more, or 30% by weight or more, and may be 40% by weight or less, 45% by weight or less, or 50% by weight or less. If the content of the positive electrode active material is less than 10% by weight, it may not be sufficient to fill the voids formed in the positive electrode active material layer, making it difficult to reduce the porosity of the positive electrode active material, and if it is greater than 50% by weight, the content of the positive electrode active material and the conductive material may be relatively reduced, resulting in a decrease in the battery performance.

In one example of the present disclosure, the conductive material may be a linear conductive material, wherein the linear conductive material may be one or more selected from the group consisting of carbon nanotube (CNT) and carbon nanofiber (CNF). The linear conductive material may improve electrical conductivity due to its morphological characteristics.

Further, the conductive material may be included in an amount of 0.05 to 10% by weight based on the total weight of the positive electrode active material layer. Specifically, the content of the conductive material may be 0.05% by weight or more, 0.1% by weight or more, 0.5% by weight or more, 1% by weight or more, 2% by weight or more, or 3% by weight or more, or may be 5% by weight or less, 7% by weight or less, or 10% by weight or less. If the content of the conductive material is less than 0.05% by weight, the electrical conductivity of the positive electrode may be degraded, and if it is more than 10% by weight, the content of the positive electrode active material and the sulfide-based solid electrolyte may be relatively reduced, resulting in a degradation of the battery performance.

In one example of the present disclosure, the positive electrode active material layer may further comprise a binder. The binder may be included to facilitate bonding between the materials contained in the positive electrode active material layer and bonding between the positive electrode active material layer and the positive electrode current collector. The binder may further reduce the positive electrode porosity by promoting bonding between the materials included in the positive electrode active material layer.

The binder may be a fibrous binder. The binder may be incorporated in a fibrous form in the positive electrode active material layer due to fibrosis during mixing in the manufacture of a positive electrode. Thus, it is preferred that the binder is easily deformable in its physical properties.

The binder may comprise one or more selected from the group consisting of polytetrafluoroethylene (PTFE), polyethylene, polypropylene, ethylene/propylene copolymer, polybutadiene, polyethylene oxide, chlorosulfonated polyethylene, polyvinylpyrrolidone, polyvinylpyridine, polyvinyl alcohol, polyvinyl acetate, polypichlorohydrin, polyphosphazene, polyacrylonitrile, polystyrene, latex, acrylic resin, phenolic resin, epoxy resin, carboxymethylcellulose, hydroxypropyl cellulose, cellulose acetate, cellulose acetate butyrate, cellulose acetate propionate, cyanoethylcellulose, cyanoethyl sucrose, polyester, polyamide, polyether, polyimide, polycarboxylate, polycarboxylic acid, polyacrylic acid, polyacrylate, lithium polyacrylate, polymethacrylic acid, polymethacrylate, polyacrylamide, polyurethane, polyvinylidene fluoride, and poly(vinylidene fluoride)-hexafluoropropene. Preferably, the binder may comprise polytetrafluoroethylene (PTFE).

Further, the binder may be included in an amount of 0.1 to 3% by weight based on the total weight of the positive electrode active material layer. Specifically, the content of the binder may be 0.1% by weight or more, 0.5% by weight or more, 0.8% by weight or more, or may be 1.5% by weight or less, 2% by weight or less, or 3% by weight or less. If the content of the binder is less than 0.1% by weight, the effect of improving the cohesion between the materials contained in the positive electrode active material layer is minimal and the electrode sheet may not be formed properly, and if the content is greater than 3% by weight, the ionic conductivity or electrical conductivity may be reduced.

In one example of the present disclosure, the porosity of the positive electrode active material layer may be 5 vol% to 19 vol%.

Specifically, the porosity may be 5 vol% or more, 8 vol% or more, 10 vol% or more, or 13 vol% or more, and may be 17 vol%, 18 vol% or less, or 19 vol% or less. The porosity is within the range optimized by considering performance such as the energy density of the battery, such that a porosity greater than 19 vol% may degrade the energy density of the battery.

In one example of the present disclosure, the thickness of the positive electrode active material layer may be 100 µm to 300 µm, more specifically, it may be 100 µm or more, 110 µm or more, 120 µm or more, 200 µm or less, 250 µm or less, or 300 µm or less. However, the thickness of the positive electrode active material layer is not limited thereto, and the thickness can be adjusted to have an appropriate positive electrode loading according to the performance improvement of the various positive electrode elements included in the positive electrode active material layer.

In one example of the present disclosure, the positive electrode current collector supports the positive electrode active material layer and serves to transfer electrons between the outer wire and the positive electrode active material layer.

The positive electrode current collector is not particularly limited as long as it has a high electronic conductivity without causing chemical changes in an all-solid-state battery. For example, stainless steel, aluminum, nickel, titanium, palladium, calcined carbon, stainless steel whose surface is treated with carbon, nickel, or silver, aluminum-cadmium alloy, and the like may be used as the positive electrode current collector.

The positive electrode current collector may have a microscopic uneven structure or adopt a three-dimensional porous structure on the surface of the positive electrode current collector to strengthen the binding force with the positive electrode active material layer. Accordingly, the positive electrode current collector may comprise various forms such as film, sheet, foil, mesh, net, porous material, foam, nonwoven material, and the like.

### Method for Producing a Positive Electrode for an All-solid-state Battery

The present disclosure relates to a method of producing a positive electrode for an all-solid-state battery. The specific substances, properties, and contents of the positive electrode active material, sulfide-based solid electrolyte, conductive material, porous carbon additive, and binder used in the manufacturing method of the positive electrode for an all-solid-state battery according to the present disclosure are as described above.

In the present disclosure, a positive electrode can be classified to a "composite positive electrode" without a binder or a "positive electrode" with a binder.

In one example of the present disclosure, a method for preparing a composite positive electrode without a binder may comprise (A1) mixing a positive electrode active material, a sulfide-based solid electrolyte, a conductive material, and a porous carbon additive; and (A2) preparing the mixed powder obtained in step (A1) in the form of a pellet. The pelletized form in step (A2) may be formed by pressing with a jig.

The composite positive electrode prepared as described above can be applied to a pressure jig cell. Since the composite positive electrode does not include a binder, the factor that the binder acts as a resistance can be eliminated. Therefore, the composite positive electrode can be used to perform a performance evaluation using a pressure jig cell in which the resistance factor is eliminated.

Further, in one example of the present disclosure, a method of manufacturing a positive electrode comprising a binder comprises (B1) mixing a positive electrode active material, a sulfide-based solid electrolyte, a conductive material, and a porous carbon additive binder; (B2) applying the mixed powder obtained in step (B1) to a calendaring process to form a film; and (B3) attaching the film-like layer of positive electrode active material obtained in step (B2) to a positive electrode current collector.

The mixing in step (B1) may be physical mixing, wherein the binder may be fibersized by the physical mixing. During the physical mixing, the binder may be physically deformed by friction with the particles in the mixed powder by shear force, causing fibrosis. For example, PTFE, which has physical properties that can be easily deformed, can be used as a binder. Furthermore, physical deformation can be accomplished by introducing induction, ball milling, or roll pressing during mixing.

Further, in step (B2), the mixed powder obtained in step (B1) may be subjected to a calendaring process to mold it into a film.

The conditions of the calendering process may be the application of suitably controlled process conditions to form a film. For example, the calendering process may be performed at a temperature of 50°C to 200°C and for 5 to 50 loops. However, the calendering process conditions, such as temperature pressure, or number of loops, may be any of those used in electrode manufacturing processes used in the conventional battery field.

Further, in step (B3), the positive electrode active material layer in the form of a film obtained in step (B2) is attached to the positive electrode current collector to prepare a positive electrode for an all-solid-state battery.

### All-solid-state Battery

The present disclosure relates to an all-solid-state battery comprising the solid electrolyte film.

An all-solid-state battery according to the present disclosure includes the positive electrode, the negative electrode, and a sulfide-based solid electrolyte layer interposed therebetween. The positive electrode is as described above.

In one example of the present disclosure, the negative electrode comprises a negative electrode active material layer, wherein the negative electrode active material layer may be formed on one side of the negative electrode current collector.

The negative electrode active material layer may comprise a negative electrode active material, a conductive material, and a binder. Alternatively, the negative electrode active material layer may be an anodeless layer.

In the negative electrode active material layer, the negative electrode active material may comprise a material capable of reversibly intercalating or deintercalating lithium (Li⁺), a material capable of reacting with lithium ions to reversibly form a lithium-containing compound, a lithium metal, or a lithium alloy.

The material into which the lithium ions (Li⁺) can be reversibly inserted or removed can be, for example, crystalline carbon, amorphous carbon, or a mixture thereof. The material capable of reacting with the lithium ions (Li⁺) to reversibly form a lithium-containing compound may be, for example, tin oxide, titanium nitrate, or silicon. The lithium alloy may be, for example, an alloy of lithium (Li) and a metal selected from the group consisting of indium (In), sodium (Na), potassium (K), rubidium (Rb), cesium (Cs), francium (Fr), beryllium (Be), magnesium (Mg), calcium (Ca), strontium (Sr), barium (Ba), radium (Ra), aluminum (Al), and tin (Sn).

Preferably, the negative electrode active material may be a lithium metal or a lithium-indium alloy (Li-In), more specifically, it may be in the form of a lithium metal or a lithium thin film or a lithium-indium alloy thin film or powder.

The negative electrode active material may be comprised in an amount of 40 to 80% by weight based on the total weight of the negative electrode active material layer. Specifically, the content of the negative electrode active material may be 40% by weight or more, 50% by weight or more, or may be 70% by weight or less, or 80% by weight or less. If the content of the negative electrode active material is less than 40% by weight, the connectivity between the wet negative electrode active layer and the dry negative electrode active layer may be insufficient, and if the content is greater than 80% by weight, the mass transfer resistance may be greater.

The binder is a component that assists in the bonding of the negative electrode active material and the conductive material or the bonding to a negative electrode current collector, and may comprise one or more selected from the group consisting of styrene-butadiene rubber, acrylated styrene-butadiene rubber, acrylonitrile copolymer, acrylonitrile-butadiene rubber, nitrile butadiene rubber, acrylonitrile-styrene-butadiene copolymer, acrylic rubber, butyl rubber, fluorine rubber, polytetrafluoroethylene, polyethylene, polypropylene, ethylene/propylene copolymer, polybutadiene, polyethylene oxide, chlorosulfonated polyethylene, polyvinylpyrrolidone, polyvinylpyridine, polyvinyl alcohol, polyvinyl acetate, polypichlorohydrin, polyphosphazene, polyacrylonitrile, polystyrene, latex, acrylic resin, phenolic resin, epoxy resin, carboxymethylcellulose, hydroxypropyl cellulose, cellulose acetate, cellulose acetate butyrate, cellulose acetate propionate, cyanoethylcellulose, cyanoethyl sucrose, polyester, polyamide, polyether, polyimide, polycarboxylate, polycarboxylic acid, polyacrylic acid, polyacrylate, lithium polyacrylate, polymethacrylic acid, polymethacrylate, polyacrylamide, polyurethane, polyvinylidene fluoride, and poly(vinylidene fluoride)-hexafluoropropene. Preferably, the binder may comprise polytetrafluoroethylene (PTFE).

Further, the binder may be comprised in an amount of 0.5% by weight to 4% by weight based on the total weight of the negative electrode active material layer, and more specifically, the content of the binder may be 0.5% by weight or more, 1% by weight or more, 1.5% by weight or more, 3% by weight or less, 3.5% by weight or less, or 4% by weight or less. If the binder content is less than 0.5% by weight, the adhesion of the positive electrode active material to the negative electrode current collector may be reduced, and if the binder content is greater than 4% by weight, the adhesion may be improved, but the content of the negative electrode active material may be reduced, resulting in a lower cell capacity.

Furthermore, the conductive material is not particularly limited as long as it prevents side reactions in the internal environment of an all-solid-state battery and has excellent electrical conductivity without causing chemical changes in the battery, and graphite or conductive carbon can be used as a representative, for example, graphite such as natural graphite, artificial graphite, and the like; carbon black such as carbon black, acetylene black, ketjen black, denka black, thermal black, channel black, furnace black, lamp black, summer black, and the like; carbon-based materials having a crystal structure of graphene or graphite; conductive fibers such as carbon fibers, metal fibers, etc.; carbon fluorides; metal powders, such as aluminum powder, nickel powder, etc.; conductive whiskeys, such as zinc oxide, potassium titanate, etc.; conductive oxides, such as titanium oxide; and conductive polymers, such as polyphenylene derivatives; can be used alone or in a mixture of two or more of the foregoing, but are not necessarily limited thereto. Preferably, the conductive material may comprise vapor-grown carbon fiber (VGCF).

Further, the conductive material may be comprised in an amount of 1% by weight to 5% by weight based on the total weight of the negative electrode active material layer, and more specifically, the content of the binder may be 1% by weight or more, 1.5% by weight or more, 2% by weight or more, and may be 4% by weight or less, 4.5% by weight or less, or 5% by weight or less. If the content of the conductive material is too small, such as less than 1% by weight, it is difficult to expect the effect of improving the electrical conductivity or the electrochemical properties of the battery may be degraded, and if it is too large, such as more than 5% by weight, the amount of negative electrode active material may be relatively small, resulting in a decrease in capacity and energy density. The method of incorporating the conductive material into the negative electrode is not substantially limited, and any conventional method known in the art can be used, such as mixing with or coating the negative electrode active material.

Furthermore, the negative electrode current collector is not particularly limited as long as it is conductive without causing chemical changes in the battery, for example, copper, stainless steel, aluminum, nickel, titanium, calcined carbon, copper or stainless steel whose surface is treated with carbon, nickel, or silver, aluminum-cadmium alloy, and the like can be used. Also, like the positive electrode current collector, the negative electrode current collector can be in various forms, such as a film, sheet, foil, net, porous material, foam, nonwoven material, etc. with fine irregularities formed on the surface.

The method of manufacturing a negative electrode is not particularly limited, and can be manufactured by forming a negative electrode active material layer on the negative electrode current collector using a conventional method of forming a layer or a film. For example, methods such as pressing, coating, or deposition can be utilized. The negative electrode of the present disclosure also includes a case in which a metallic lithium thin film is formed on a metal plate by initial charging after the battery is assembled without a lithium thin film on the negative electrode current collector.

Furthermore, the anodeless layer refers to a negative electrode layer in which no lithium metal or lithium alloy that can be a source of lithium among the negative electrode active materials is present in the negative electrode at the time of initial assembly of the battery, but lithium is precipitated in the negative electrode by charging. A battery comprising the anodeless layer may be referred to as a negative electrode-free battery.

In the negative electrode-free battery, during the charging and discharging of the battery, lithium ions released from the positive electrode migrate to the negative electrode to form a negative electrode active material layer. For example, during charging of the battery, lithium ions are released from the positive electrode active material and migrate to the negative electrode side to form a lithium metal consisting purely of lithium, forming a lithium metal layer on the negative electrode current collector, or forming a lithium metal structure in any other form other than a layer form. Any other form may refer to, for example, a structure in which the lithium metal is agglomerated in the form of particles.

In one example of the present disclosure, the sulfide-based solid electrolyte comprised in the sulfide-based solid electrolyte layer may comprise one or more selected from the group consisting of LiPSX (wherein X is Cl, Br, or I), LiGePS, and LiPS. However, the sulfide-based solid electrolyte is not limited to these, and a wide range of sulfide-based solid electrolytes conventionally used in the art may be used.

### Battery Module

The present disclosure also relates to a battery module comprising the all-solid-state battery as a unit cell, a battery pack comprising the battery module, and a device comprising the battery pack as a power source.

Specific examples of such devices include, but are not limited to, a power tool powered by an electric motor; an electric vehicle, including an electric vehicle (EV), a hybrid electric vehicle (HEV), a plug-in hybrid electric vehicle (PHEV), and the like; an electric two-wheeled vehicle, including an electric bicycle (E-bike) and an electric scooter (E-scooter); an electric golf cart; a power storage system; and the like.

### [Mode for Practicing the Invention]

Hereinafter, preferred examples of the present disclosure are described for the purpose of illustrating the present disclosure, but it will be apparent to those skilled in the art that various changes and modifications are possible within the scope of the present disclosure and the technical idea, and that such changes and modifications fall within the scope of the appended patent claims.

In the following examples and comparative examples, a positive electrode and an all-solid-state battery comprising same were prepared according to the composition of the positive electrode active material layer and the properties of the raw material as described in Table 1 below.

**[Table 1]**

| | Composition of positive electrode active material layer (weight%) | | | | | Properties of raw material | | | |
|---|---|---|---|---|---|---|---|---|---|
| | | | | | | Porous carbon additive | | Positive electrode active material | Sulfide-based solid electrolyte |
| | Positive electrode active material | Sulfide-based solid electrolyte | Conductive material | Porous carbon additive | Binder | BET specific surface area (m²/g) | Particle diameter (D50) (µm) | Particle diameter (D50) (µm) | Particle diameter (D50) (µm) |
| Example 1 | 60 | 35 | 4 | 1 | - | 60 m²/g or less | 1.7¹⁾ | 5.3 | 0.8 |
| Example 2 | 83 | 15 | 0.8 | 0.2 | 1 | 60 m²/g or less | 1.7¹⁾ | 5.3 | 0.8 |
| Comparative Example 1 | 60 | 35 | 5 | - | - | - | - | 5.3 | 0.8 |
| Comparative Example 2 | 60 | 35 | 4 | 1 | - | 500 m²/g or more | 1.7³⁾ | 5.3 | 0.8 |
| Comparative Example 3 | 83 | 15 | 1 | - | 1 | - | - | 5.3 | 0.8 |
| Comparative Example 4 | 83 | 15 | 0.8 | 0.2 | 1 | 60 m²/g or less | 1.0²⁾ | 5.3 | 0.8 |
| Note 1) The porous carbon additive used in Examples 1 and 2 is referred to as "low specific surface area porous additive 1". | | | | | | | | | |
| Note 2) The porous carbon additive used in Comparative Example 4 has a smaller particle diameter compared to the low specific surface area porous additive 1, and is referred to as "low specific surface area porous additive 2" for distinction. | | | | | | | | | |
| Note 3) The porous carbon additive used in Comparative Example 2 is referred to as "high specific surface area porous additive". | | | | | | | | | |

### Example 1: Preparation of a composite positive electrode

The positive electrode was prepared as follows using LiN_{0.8}Co_{0.1}Mn_{0.1}O₂(NCM 811) as a positive electrode active material, Li₆PS₅Cl as a sulfide-based solid electrolyte, and a carbon nanofiber (CNF) as a linear conductive material and a porous carbon additive (Heraeus, BET ≤ 60 m²/g) as a conductive material. Hereinafter, the porous carbon additive is referred to as low specific surface area porous carbon additive 1.

Powder mixing of the positive electrode active material, sulfide-based solid electrolyte, conductive material, and porous carbon additive was performed in a weight ratio of 60 : 35 : 4 : 1. Specifically, the positive electrode active material and the sulfide-based solid electrolyte were quantified in a powder state and mixed for 15 minutes using agate mortar in a dry room environment to obtain a mixture. The conductive material and porous carbon additive were then quantified and added to the above mixture and mixed for an additional 15 minutes to obtain a mixed powder.

Using a pressurized jig, the above mixed powder was pressurized and prepared into a pelletized composite positive electrode with a 3 mAh/cm² loading.

### Example 2: Preparation of a positive electrode

The positive electrode was prepared as follows using LiN_{0.8}Co_{0.1}Mn_{0.1}O₂(NCM 811) as a positive electrode active material, Li₆PS₅Cl as a sulfide-based solid electrolyte, and a carbon nanofiber (CNF) as a linear conductive material as a conductive material, low specific surface area porous carbon additive 1 (Heraeus, BET ≤ 60 m²/g) as a porous carbon additive, and polytetrafluoroethylene (PTFE) as a binder.

Powder mixing of the positive electrode active material, sulfide-based solid electrolyte, conductive material, porous carbon additive, and binder was performed in a weight ratio of 83 : 15 : 0.8 : 0.2 : 1. Specifically, the positive electrode active material and the sulfide-based solid electrolyte were quantified in a powder state and mixed for 15 minutes using a blade mixer in a dry room environment to obtain a mixture. The conductive material and low porous carbon additive 1 were then quantified and added to the above mixture and the binder, polytetrafluoroethylene (PTFE) powder, was quantified and further mixed to obtain a mixed powder.

After the above mixed powder was introduced into the mortar, fibrosis was carried out in the mortar, and calendering was carried out in a roller to prepare a positive electrode with a thickness level of 150 µm.

### Comparative Example 1

The composite positive electrode was prepared in the same manner as in Example 1, except that no porous carbon additive was used.

### Comparative Example 2

The composite positive electrode was prepared in the same manner as in Example 1, except that a high specific surface area porous carbon additive (Heraeus, BET ≥ 500 m²/g) was used instead of low specific surface area porous carbon additive 1 as a porous carbon additive.

### Comparative Example 3

The positive electrode was prepared in the same manner as in Example 2, except that no porous carbon additive was used.

### Comparative Example 4

The positive electrode was prepared in the same manner as in Example 2, except that a porous carbon additive (Heraeus, BET ≤ 60 m²/g) with a small particle diameter compared to the porous carbon additive (low specific surface area porous carbon additive 1) used in Example 2 was used. Hereinafter, the porous carbon additive with a smaller particle diameter than the low specific surface area porous carbon additive 1 is referred to as low specific surface area porous carbon additive 2.

### Experimental Example 1: Evaluation of performance of all-solid-state batteries

The performance evaluation of all-solid-state batteries was conducted depending on the inclusion of a porous carbon additive in the positive electrode active material layer and the specific surface area of the porous carbon additive. The composite positive electrodes prepared in Example 1, Comparative Example 1, and Comparative Example 2 were subject to evaluation.

In order to evaluate the performance of the all-solid-state batteries, a pressure jig cell was prepared by the following method.

After transferring the pelletized composite positive electrode to a pressure jig cell, a sulfide-based solid electrolyte powder (200 mg) was placed on the pellet and pressurized with a force of 400 Mpa for 60 seconds to form a film-like sulfide-based solid electrolyte layer. Then, a lithium metal negative electrode was placed on one side of the sulfide-based solid electrolyte layer, and pressurized again with a force of 100 Mpa to increase the contact between the sulfide-based solid electrolyte layer and the negative electrode. Afterward, the pressure jig cell was prepared by clamping at an appropriate pressure.

The capacity capability of the pressure jig cell was observed using the protocol of activating the cell in a charger/discharger to 0.05C for 2 cycles, and then discharging it up to 1C, and the results are shown in Table 2 and Table 3 below. Specifically, the capacity capability was observed using the protocol of 0.05C CC/CV (Constant Current/Constant Voltage) charging, 0.05C CC (Constant Current) discharging for 2 cycles, followed by 0.1C CC/CV charging, but CC discharging to 0.1C/0.2C/0.33C/0.5C/1C, in a charger/discharger.

**[Table 2]**

| | | | | |
|---|---|---|---|---|
| Voltage range/Temperature | | 3.0 to 4.25 V/60°C | | |

| Separation | | Example 1 | Comparative Example 1 | Comparative Example 2 |
|---|---|---|---|---|
| Loading (mAh/cm²) | | 3 | | |
| 1^{st} Charge capacity (0.05C) | mAh/g | 228.1 | 215.3 | 221.7 |
| 1^{st} Discharge capacity (0.05C) | | 210.2 | 201.2 | 205.7 |
| Efficiency | % | 92.1 | 93.4 | 92.8 |
| 2^{nd} Charge capacity (0.05C) | mAh/g | 216.2 | 206.8 | 211.5 |
| 2^{nd} Discharge capacity (0.05C) | | 209.1 | 199.6 | 204.4 |
| Efficiency | % | 96.7 | 96.8 | 96.7 |

Referring to Table 2 above, it can be seen that Example 1 and Comparative Example 1, with and without low specific surface area porous carbon additive 1, respectively, exhibited superior performance in terms of discharge capacity compared to Comparative Example 1 after formation for 2 cycles. In addition, Example 1 and Comparative Example 2 include low specific surface area porous carbon additive 1 and high specific surface area porous carbon additive 2, respectively, and it can be seen that the initial efficiency of Comparative Example 2 is on par with Comparative Example 1, but the discharge capacity is somewhat inferior.

**[Table 3]**

| mAh (%) | | Example 1 | Comparative Example 1 | Comparative Example 2 |
|---|---|---|---|---|
| Rate (0.1C charge) | 0.1C | 206.6 | 195.8 | 209 |
| | 0.2C | 203.3 | 192 | 205.5 |
| | 0.33C | 199.8 | 187.5 | 202.1 |
| | 0.5C | 194.9 | 180.6 | 195.3 |
| | 1.0C | 185.4 | 169.5 | 163.2 |

Referring to Table 3 above, it is confirmed that Example 1 has a better discharge capacity retention compared to Comparative Example 1 and Comparative Example 2. Specifically, Example 1 maintained a discharge capacity of 185 mAh/g at 1C discharge, while Comparative Example 1 and Comparative Example 2 measured discharge capacities of 170 mAh/g or less. This is due to the phenomenon that when the specific surface area of the porous carbon additive in the composite positive electrode is high (Comparative Example 2), the decomposition reaction of the sulfide-based solid electrolyte in contact with the porous carbon additive is accelerated with increasing c-rate. Furthermore, when the positive electrode does not include a porous carbon additive (Comparative Example 1), the conductive network is sufficiently formed due to the use of a linear conductive material, but the porosity of the composite positive electrode in the pressure jig cell may be higher than that of the positive electrode with a porous carbon additive, and it can be inferred that the lithium ion conductivity is reduced, resulting in a reduced discharge capacity retention.

### Experimental Example 2: Confirmation of the internal structure of the positive electrode

Experiments were conducted to measure the internal structure and electrical conductivity of the positive electrode depending on the inclusion of a porous carbon additive in the positive electrode active material layer containing the binder and the particle diameter of the porous carbon additive. Example 2, Comparative Example 3, and Comparative Example 4 were subject to evaluation. They all contain a binder in the positive electrode active material layer.

The positive electrodes made according to Example 2, Comparative Example 3, and Comparative Example 4 were further pressurized using a warm isostatic press (WIP) to bring the positive electrode elements into full contact, and the sides of the positive electrodes were observed with a scanning electron microscope (SEM). Example 2, Comparative Example 3, and Comparative Example 4 are all examples of using a binder in the manufacture of the positive electrode, wherein Example 2 includes a low specific surface area porous carbon additive 1, Comparative Example 3 does not include a porous carbon additive, and Comparative Example 4 includes a low specific surface area porous carbon additive 2 with a smaller particle diameter compared to Example 2.

FIG. 1 is a scanning electron micrograph of the side of the positive electrode made by using a positive electrode material in Example 2, Comparative Example 3, and Comparative Example 4.

Referring to FIG. 1, it can be seen that Example 2 and Comparative Example 4, including the porous carbon additive, did not reduce the dispersibility of the components included in the positive electrode active material layer, particularly compared to Comparative Example 3, which does not include the porous carbon additive.

In addition, porosity was measured before and after rolling the WIP, and electrical conductivity was measured using the fabricated positive electrode, and the results are shown in Table 4 below. The porosity was measured using the positive electrode density calculated from 1) the thickness after WIP rolling of the positive electrode, 2) the weight of the positive electrode, 3) the area of the positive electrode, and 4) the density of the positive electrode elements used, according to Formula 1 below. Positive electrode porosity (%) = (1-([positive electrode weight]/[positive electrode area x positive electrode thickness]/[positive electrode density] x 100)

In addition, the electrical conductivity (S/cm) was measured by making an electrode for electrical conductivity measurement by preparing a positive electrode, and then contacting an electrically conductive Al foil on one side of the positive electrode and then pressing it with WIP, and then calculating the inverse of the resistance value (ohm · cm) obtained by contacting the multi probe of the electrode resistance measurement system (RM2610, Hioki), and the average value after three measurements was written.

**[Table 4]**

| | Example 2 | Comparative Example 3 | Comparative Example 4 |
|---|---|---|---|
| Porosity after rolling (vol%) | 16 | 19.2 | 20.5 |
| Electrical conductivity (S/cm) | 5.9. E-05 | 5.0. E-05 | 4.7.E-05 |

Referring to Table 4 above, the positive electrode porosity of Example 2 comprising low specific surface area porous carbon additive 1 decreased by about 3 vol% compared to that before rolling, compared to Comparative Example 3, which does not include a porous carbon additive. In addition, the electrical conductivity measured using the positive electrode of Example 2 was also found to be greater than those of Comparative Examples 3 and 4.

The positive electrode of Comparative Example 4, which includes a low specific surface area porous carbon additive 2 having a smaller particle diameter compared to the low specific surface area porous carbon additive 1 of Example 2, showed a rather increased porosity after rolling and the lowest electrical conductivity.

The low specific surface area porous carbon additive 1 (D50, 1.7 µm) used in Example 2 has a particle diameter between the positive electrode active material (D50, 5 µm) and the sulfide-based solid electrolyte (D50, 0.7 µm). The low specific surface area porous carbon additive 2 used in Comparative Example 4 had a smaller particle diameter compared to the low specific surface area porous carbon additive 1 of Example 2, and was therefore expected to more effectively fill the pores formed by the positive electrode active material and the sulfide-based solid electrolyte, but due to its very low particle diameter and the resulting fine powder, it was found that it only adsorbed on the surface of the positive electrode active material and did not reduce the porosity of the entire positive electrode active material layer.

Therefore, it can be predicted that the low specific surface area porous carbon additive 1 used in Example 2 will reduce the porosity of the positive electrode active material layer and thereby increase the performance of the positive electrode.

## Claims

1. A positive electrode for an all-solid-state battery comprising a positive electrode active material, a sulfide-based solid electrolyte, a conductive material and a porous carbon additive,
wherein a particle diameter of the porous carbon additive is between a particle diameter of the positive electrode active material and a particle diameter of the sulfide-based solid electrolyte,
wherein the porous carbon additive has a low specific surface area porous carbon additive of a BET specific surface area of 100 m²/g or less.

2. The positive electrode according to claim 1,
wherein the BET specific surface area of the porous carbon additive is 70 m²/g or less.

3. The positive electrode according to claim 1,
wherein the porous carbon additive has a particle diameter (D50) of 1.0 µm to 4.0 µm.

4. The positive electrode according to claim 1,
wherein the porous carbon additive has a bulk density of 0.18 g/cc or more.

5. The positive electrode according to claim 1,
wherein the porous carbon additive has a powder resistivity of 0.05 ohm.cm or less.

6. The positive electrode according to claim 1,
wherein the positive electrode active material has a particle diameter (D50) of 3.0 µm to 8.0 µm.

7. The positive electrode according to claim 1,
wherein the sulfide-based solid electrolyte has a particle diameter (D50) of 0.1 µm to 1.5 µm.

8. The positive electrode according to claim 1,
wherein the positive electrode is in the form of a pellet comprising a positive electrode active material, a sulfide-based solid electrolyte, a conductive material, and a porous carbon additive.

9. The positive electrode according to claim 1,
wherein the positive electrode comprise a positive electrode current collector; and a positive electrode active material layer formed on one side of the positive electrode current collector,
wherein the positive electrode active material layer comprises the positive electrode active material, the sulfide-based solid electrolyte, the conductive material, the binder, and the porous carbon additive.

10. The positive electrode according to claim 9,
wherein the binder comprises one or more selected from the group consisting of polytetrafluoroethylene (PTFE), polyethylene, polypropylene, ethylene/propylene copolymer, polybutadiene, polyethylene oxide, chlorosulfonated polyethylene, polyvinylpyrrolidone, polyvinylpyridine, polyvinyl alcohol, polyvinyl acetate, polypichlorohydrin, polyphosphazene, polyacrylonitrile, polystyrene, latex, acrylic resin, phenolic resin, epoxy resin, carboxymethylcellulose, hydroxypropyl cellulose, cellulose acetate, cellulose acetate butyrate, cellulose acetate propionate, cyanoethylcellulose, cyanoethyl sucrose, polyester, polyamide, polyether, polyimide, polycarboxylate, polycarboxylic acid, polyacrylic acid, polyacrylate, lithium polyacrylate, polymethacrylic acid, polymethacrylate, polyacrylamide, polyurethane, polyvinylidene fluoride, and poly(vinylidene fluoride)-hexafluoropropene.

11. The positive electrode according to claim 1,
wherein the conductive material is one or more linear conductive material selected from the group consisting of carbon nanotube (CNT) and carbon nanofiber (CNF).

12. The positive electrode according to claim 1,
wherein the porous carbon additive is one or more selected from the group consisting of soft carbon and hard carbon.

13. The positive electrode according to claim 1,
wherein the porous carbon additive is one or more selected from the group consisting of activated carbon and carbon black.

14. The positive electrode according to claim 1,
wherein the porosity of the positive electrode is 5 vol% to 19 vol%.

15. The positive electrode according to claim 1,
wherein the positive electrode active material is included in an amount of 55 to 90% by weight based on the total weight of the positive electrode,
wherein the sulfide-based solid electrolyte is included in an amount of 10 to 50% by weight based on the total weight of the positive electrode,
wherein the conductive material is included in an amount of 0.05 to 10% by weight based on the total weight of the positive electrode,
wherein the porous carbon additive is included in an amount of 0.1 to 3% by weight based on the total weight of the positive electrode.

16. An all-solid-state battery comprising the positive electrode according to claim 1, a negative electrode, and a sulfide-based solid electrolyte layer interposed therebetween.
